# EUROPÄISCHE PATENTSCHRIFT

(11) **EP 0 860 320 B1**
(45) Veröffentlichungstag und Bekanntmachung des Hinweises auf die Patenterteilung: **25.07.2001**
(21) Anmeldenummer: 97102740.4
(22) Anmeldetag: 20.02.1997
(51) Int. Cl.: B60P 1/44

(54) **Ladebordwandsystem**
Loading tailgate system
Système de hayon élévateur

(43) Veröffentlichungstag der Anmeldung: 26.08.1998
(73) Patentinhaber: Sörensen Hydraulik, Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(56) Entgegenhaltungen:
- DE-A- 3 042 485
- DE-A- 3 345 589

## Beschreibung

Die Erfindung betrifft ein Ladebordwandsystem zur Befestigung an Fahrzeugen, insbesondere Lastkraftfahrzeugen, umfassend ein im wesentlichen parallelogrammförmiges, aus zwei im wesentlichen parallel voneinander beabstandeten Tragwerken bestehendes Hub- und Klapptragwerk, eine im wesentlichen plattenförmige Ladebordwand zum Heben und Absenken einer Last und zum Verschließen eines Stauraumes des Fahrzeugs und wenigstens eine Hubzylindereinrichtung zum Heben und Senken der Ladebordwand sowie wenigstens eine Klappzylindereinrichtung zum Verschwenken der Ladebordwand von der Horizontalen in die Vertikale und umgekehrt.

Ein Ladebordwandsystem dieses Art ist aus dem Dokument DE-A-3 345 589 bekannt.

Ladebordwandsysteme sind seit langem bekannt und werden in den vielfältigsten Ausführungsformen für die vielfältigsten Zwecke verwendet. Bei im Stand der Technik bekannten Grundkonstruktionen derartiger Ladebordwandsystem erfolgt das Verschwenken der Ladebordwand von der Horizontalen in die Vertikale, d.h. zum Verschließen eines Stauraumes des Fahrzeuges nach abgeschlossenem Be- und Entladevorgang und umgekehrt, d.h. von der Vertikalen in die Horizontale zur Ausführung des Be- und Entladevorganges nach vorherigem Abschwenken auf die Grundebene (Straßenebene), mit gleicher Geschwindigkeit bzw. gleicher Winkelgeschwindigkeit. Die Klappgeschwindigkeit im Stand der Technik bekannter Ladebordwände aus der Horizontalen in die Vertikale und umgekehrt beträgt üblicherweise 10° sec⁻¹ und mehr.

Es hat sich gezeigt, daß diese im wesentlichen für die Hochklapp- und Niederklappbewegung der Ladebordwand gleiche Geschwindigkeit problematisch ist, d.h. bei den jeweiligen Stopps bei Erreichen des vertikalen Endpunktes und beim Erreichen des horizontalen Endpunktes zu hohen Impulsen führt, d.h. hohe Kraftstöße in das Tragwerk eingeleitet werden, was gleichermaßen für das Fahrzeug, an dem das Ladebordwandsystem angeordnet ist, sowohl bezüglich seines Chassis als auch seiner Karosserie gilt.

Man hat versucht, diese Impulse dadurch zu dämpfen, daß man elastische Dämpfungseinrichtungen vorgesehen hat, die allerdings die in sie gesetzten Erwartungen nicht erfüllt haben. Die Folge ist, daß bisher durch entsprechende Dimensionierung der Tragwerke selbst sowie der Klappzylindereinrichtung bzw. Klappzylindereinrichtungen versucht wurde, diesem Problem zu begegnen, was zu verhältnismäßig aufwendigen und auch großgewichtigen Konstruktionen geführt hat, was sehr nachteilig ist, da diese damit verbundene Totlast fortwährend mit dem Fahrzeug, an dem das Ladebordwandsystem angeordnet ist, befördert werden muß, was wiederum nachteiligerweise zu hohem Kraftstoffverbrauch und auch zu hohem Verschleiß des Fahrzeugs führt.

Es ist somit Aufgabe der vorliegende Erfindung, ein Ladebordwandsystem der eingangs genannten Art zu schaffen, das die im Stand der Technik bekannten Nachteile derartiger Systeme nicht aufweist, das gering im Gewicht ist und die auftretenden Impulse beim Abschluß der Schwenkbewegung der Ladebordwand von der Horizontalen in die Vertikale und von der Vertikalen in die Horizontale, wenn die endgültige Klapposition erreicht ist, stark vermindert und somit die Kräfteeinleitung in die Tragwerke des Ladebordwandsystems auf ein erträgliches und konstruktiv einfach beherrschbares Minimum reduziert, wobei ein derartiges Ladebordwandsystem einfach im Aufbau und kostengünstig bereitstellbar sein soll, und wobei auch dafür im Stand der Technik an sich bekannte Systeme, betreffend die Klappzylindereinrichtung, verwendet werden können und eine ausreichende Standzeit derartiger Systeme erreicht wird.

Gelöst wird die Aufgabe gemäß der Erfindung dadurch, daß die Klappzylindereinrichtung derart aufgebaut ist, daß die Verschwenkung der Ladebordwand von der Horizontalen in die Vertikale in einem vorbestimmten ersten Winkelintervall mit einer vorbestimmten Geschwindigkeit v₁ erfolgt und in einem vorbestimmten zweiten Winkelintervall mit einer vorbestimmten Geschwindigkeit v₂ erfolgt, wobei v₁ < v₂ ist.

Der Vorteil der erfindungsgemäßen Lösung besteht im wesentlichen darin, daß durch an sich einfache Maßnahmen eine Reduzierung der Schwenkgeschwindigkeit, insbesondere auch beim Herabklappen der Ladebordwand von der Vertikalen in die Horizontale, insbesondere im Bereich des letzten Winkelintervalls vor dem endgültigen Erreichen der horizontalen Endstellung möglich ist, d.h. eine Einleitung eines hohen Impulses durch die vorherige definierte Abbremsung bzw. Verminderung der Geschwindigkeit in die Tragwerke des Ladebordwandsystems und somit in die Karosserie und das Chassis des Fahrzeugs soweit vermindert wird, daß es in vertretbaren Grenzen gehalten werden kann, die durch verhältnismäßig einfache konstruktive Mittel beherrscht werden können. Grundsätzlich kann dabei die Geschwindigkeit, mit der die Schwenkbewegung der Ladeplattform erfolgt, auch durch geeignete Steuerung beispielsweise der Zufuhrgeschwindigkeit eines Druckmediums in die Klappzylindereinrichtung, die die Schwenkbewegung des Ladebordwandsystems ausführt, erfolgen, was gleichermaßen für die Austrittsgeschwindigkeit des Druckmediums aus der Klappzylindereinrichtung beim Abschwenkvorgang aus der Vertikalen in die Horizontale gilt.

Bei einer vorteilhaften zweiten Lösung des Ladebordwandsystems erfolgt die Verschwenkung der Ladebordwand von der Vertikalen in die Horizontale in dem vorbestimmten zweiten Winkelintervall mit einer Geschwindigkeit v₃ und in dem vorbestimmten ersten Winkelintervall mit einer Geschwindigkeit v₄, wobei v₃ > v₄ ist. D.h. mit anderen Worten, daß für die Absenkung der Ladebordwand von der Vertikalen in die Horizontale in den jeweiligen beiden Winkelintervallen grundsätzlich andere Geschwindigkeiten gewählt werden können als beim Verschwenken der Ladebordwand von der Horizontalen in die Vertikale, um beispielsweise auf schwere Ladebordwände Rücksicht nehmen zu können, die für bestimmte Ausgestaltungen der Ladebordwandsysteme verwendet werden müssen, d.h. wenn beispielsweise bestimmungsgemäß hohe Lasten angehoben werden müssen. Da der Impuls, den die Ladebordwand beim Erreichen der horizontalen Endstellung auf das Ladebordwandsystem in seiner Gesamtheit sowie das Chassis und die Karosserie des Fahrzeuges ausübt, proportional der Masse ist, kann beispielsweise darauf Rücksicht genommen werden, indem gemäß dieser vorteilhaften Ausführungsform die beiden Geschwindigkeiten bei der Abschwenkbewegung jeweils geringer als die beiden Geschwindigkeiten bei der Hochschwenkbewegung der Ladeplattform gehalten werden.

Es ist aber auch vorteilhafterweise möglich, die Geschwindigkeiten so zu wählen, daß v₁ = v₄ ist und/oder v₂ = v₃ ist, wobei eine derartige Ausgestaltung bzw. derartige Ausgestaltungen des Ladebordwandsystems eine verhältnismäßig einfache Steuerung ermöglichen, da die Schwenkgeschwindigkeiten in den jeweiligen Winkelintervallen sowohl bei der Hochschwenkbewegung als auch der Abschwenkbewegung gleich sind.

Obwohl grundsätzlich die Bewegung im ersten Winkelintervall und auch im zweiten Winkelintervall beliebig geeignet auswählbar ist, und zwar auch in Abhängigkeit der Masse bzw. des Gewichtes der Ladebordwand, ist es vorteilhaft, als Geschwindigkeit für das erste Winkelintervall 4° sec⁻¹ zu wählen und für das zweite Winkelintervall 10° sec⁻¹, wobei beim Abschwenkvorgang dementsprechend v₃ mit 10° sec⁻¹ und v₄ mit 4° sec⁻¹ gewählt werden kann. Es sei aber darauf hingewiesen, daß grundsätzlich jede beliebige andere Geschwindigkeit gewählt werden kann, und zwar jeweils nach Art und Aufbau des Ladebordwandsystems, beispielsweise in Abhängigkeit der Größe bzw. der Masse bzw. des Gewichts der Ladebordwand.

Wie vorangehend schon erwähnt, kann an sich die Steuerung der Geschwindigkeit der Verschwenkung der Ladebordwand im ersten Winkelintervall und im zweiten Winkelintervall an sich auf beliebige Weise geschehen, d.h. faktisch auch durch geeignete Steuerung der Zufuhrmenge in den Druckraum der Klappzylindereinrichtung hinein und der Abfuhrmenge des Druckmediums aus dem Druckraum der Klappzylindereinrichtung, d.h. durch entsprechende Förderung der Zuführpumpe für das Druckmedium im Steuersystem des Mediums.

Vorteilhaft, weil sehr einfach realisierbar, ist es, anstelle dieser Steuerung des Ladebordwandsystems vorzusehen, daß die Klappzylindereinrichtung einen Kolben und einen Zylinder umfaßt, in dem der Kolben im wesentlichen axial zur Zylinderachse unter Einfluß eines Druckmediums verschiebbar ist, wobei der Kolben in seinem Kopfbereich ein zur Zylinderachse paralleles und axial verschiebbares Stiftelement aufweist, das bei Beginn der Schwenkbewegung der Ladebordwand von der Horizontalen in die Vertikale solange ventilartig eine zweite Zufuhrleitung für das Druckmedium in einem Kopf des Zylinders verschließt, bis das erste Winkelintervall der Hubbewegung beendet ist. Diese sehr vorteilhafte Ausgestaltung ermöglicht eine sehr einfache, aber hocheffektive Steuerung der beiden unterschiedlichen Schwenkgeschwindigkeiten im ersten und zweiten Intervall, ohne daß seitens der Zufuhrpumpe für das Druckmedium irgendeine Steuerung erforderlich ist. Es kann deshalb bei dieser Ausgestaltung auf im Handel erhältliche Hydraulikaggregate, die in kompletter Form angeboten werden, zurückgegriffen werden, so daß insgesamt das Ladebordwandsystem sehr kostengünstig bereitgestellt werden kann und Wartungsarbeiten auf ein absolut notwendiges Minimum reduziert werden können, da durch die vorgeschlagene vorteilhafte Ausgestaltung komplizierte und wartungstechnisch anspruchsvolle Ventil- und Steuereinrichtungen vollständig entfallen.

Obwohl es möglich ist, daß das das eigentliche Steuerventil in der Klappzylindereinrichtung bildende Stiftelement auf beliebige geeignete Weise in seiner aus dem Kolben maximal herausragenden Grundstellung zu halten, ist es sehr vorteilhaft, das Stiftelement druckfederbeaufschlagt in dieser Grundstellung zu halten, d.h. mit sehr einfachen und praktisch wartungsfreien Mitteln.

Auch ist es vorteilhaft, den Kolbenkopf druckfederbeaufschlagt in seiner an den Zylinderkopf wenigstens angenäherten Endstellung zu halten, d.h. die Zusammendrückbewegung des Klappzylinders, die bei der Rückschwenkbewegung der Ladebordwand von der Vertikalen in die Horizontale stattfindet, eben, soweit dieses nicht aufgrund des Schwerkrafteinflusses erfolgt, druckfederbeaufschlagt erfolgen zu lassen. Zwar ist es auch möglich, die Klappzylindereinrichtung als mit einem Druckmedium zu betätigendes Doppelzylindersystem auszubilden, dieses wäre aber im Vergleich zur druckfederbeaufschlagten Rückbewegung des Kolbens eine zwar ebenfalls gute, aber eine konstruktiv und ggf. auch steuertechnisch aufwendigere Lösung.

Es ist bekannt, daß die gattungsgemäßen Ladebordwandsysteme dem rauhen Transportbetrieb bei allen Wetterlagen ausgesetzt sind, d.h. bei Regen, Schnee und Eis, Tauwetter und dergleichen sowie dem an sich ganzjährig mehr oder weniger stark vorhandenem Schmutz in der Luft voll funktionsfähig sein müssen. Um aufgrund derartiger Einflüsse eine Beeinflussung der Funktionsfähigkeit der Klappzylindereinrichtung entgegenzuwirken, sind die Klappzylindereinrichtungen an sich verhältnismäßig gut gegen das Eindringen derartiger Umgebungsmedien abgedichtet, insbesondere der Durchtritt des axial verschiebbaren Kolbenstößels bzw. der Kolbenstange aus dem Zylindergehäuse heraus. Diese Dichtungsmaßnahmen sind, wie gesagt, nur mit verhältnismäßig aufwendigen konstruktiven Mitteln zu bewerkstelligen, wobei diese Dichtmittel aber dennoch einen Hauptangriffspunkt für Umwelteinflüsse bieten. Um nun einerseits für diesen Bereich die konstruktive Ausgestaltung einfacher als bisher ausbilden zu können und andererseits aber die vollständige Funktionsfähigkeit der Zylindereinrichtung dennoch zu gewährleisten, so daß der Wartungsbetrieb auf ein absolut notweniges Maß reduziert werden kann, und die Kosten derartiger Zylindereinrichtungen bzw. Klappzylindereinrichtungen insgesamt noch niedriger gehalten werden können als bisher, ist es vorteilhaft, den Raum zwischen Kolben und Zylinderwand mit einer vorbestimmten Menge eines wenigstens korrosionshemmendender Eigenschaften aufweisenden Schmier- und/oder Gleitmittels zu befüllen, so daß trotz eines möglicherweise von außen in den Innenraum des Zylinders eindringenden Anteils an Umweltmedien, beispielsweise Feuchtigkeit und Staub, die Funktionsfähigkeit der Klappzylindereinrichtung nicht beeinträchtigt wird. Zudem erlaubt es die vorteilhafte vorgeschlagene Lösung, für die Klappzylindereinrichtung Werkstoffe zu verwenden, die preisgünstiger sind als die bisher verwendeten, da an die Korrosionsbeständigkeit durch die vorgeschlagene vorteilhafte Lösung geringere Anforderungen gestellt sind als bisher an regelmäßig aus nichtrostenden Stählen hergestellte Klappzylindereinrichtungen.

Bei einer anderen Ausgestaltung des Ladebordwandsystems umfaßt die Klappzylindereinrichtung einen Kolben und einen Zylinder, in dem der Kolben im wesentlichen axial zur Zylinderachse unter Einfluß eines über eine zweite Zufuhröffnung zugeführten Druckmediums, das in den Druckraum eingebbar ist, soweit verschiebbar ist, bis das Ende des ersten Winkelintervalls der Hubbewegung erreichbar ist, wobei dann eine erste Zufuhröffnung durch den Kolbenkopf freigegeben wird, durch die zusätzliches Druckmedium in den Druckraum gelangen kann. Diese Ausgestaltung ist noch einfacher realisierbar als die vorangehend aufgeführte, da hier bewegliche und zusätzliche Teile bei der Hubzylindereinrichtung vollständig entfallen, d.h. die Steuerung der Zuführung des Druckmediums erfolgt durch den Kolben bei der Ausführung seiner Bewegung, d.h. beim Verschwenken der Ladebordwand von der Horizontalen in die Vertikale bzw. von der Vertikalen in die Horizontale mit den jeweils dabei auftretenden unterschiedlichen Schwenkgeschwindigkeiten in den beiden Winkelintervallen, selbständig.

Obwohl es grundsätzlich möglich ist, bei dieser vorteilhaften alternativen Ausgestaltung der Ladebordwand, soweit sie die Klappzylindereinrichtung betrifft, die erste Zufuhröffnung an einer beliebig geeignet gewählten Stelle vorzusehen, ist es jedoch sehr vorteilhaft, weil einfach realisierbar, die erste Zufuhröffnung in der Zylinderwand auszubilden, so daß dann, wenn der Kolben im Zuge der Schwenkbewegung die zweite Zufuhröffnung freigibt, zusätzliches Druckmedium in den Druckraum eintritt, so daß im zweiten Winkelintervall die Ladebordwand mit höherer Schwenkgeschwindigkeit in die Vertikale geschwenkt werden kann bzw. umgekehrt aus der Vertikalen bis zum Verschließen der ersten Zufuhröffnung durch diese zusätzliches Druckmedium aus dem Druckraum in einen Mediumvorrat zurückgeleitet werden kann.

Die Erfindung wird nun unter Bezugnahme auf die nachfolgenden schematischen Zeichnungen anhand zweier Ausführungsbeispiele eingehend beschrieben. Darin zeigen:
- Fig. 1: in der Seitenansicht in stark vereinfachter Darstellung das Heckteil eines Fahrzeuges, an dem eine Ladebordwand gemäß der Erfindung angeordnet ist, mit einem typischen parallelogrammförmigen Tragwerk, in dem eine Klappzylindereinrichtung dargestellt ist, zur Darstellung der Schwenkbewegung der Ladebordwand,
- Fig. 2: in der Seitenansicht im Teilschnitt und im Ausschnitt eine typischerweise verwendete Klappzylindereinrichtung und
- Fig. 3: eine alternative, vereinfachte Ausführungsform der Klappzylindereinrichtung gegenüber der Ausführungsform von Fig. 2.

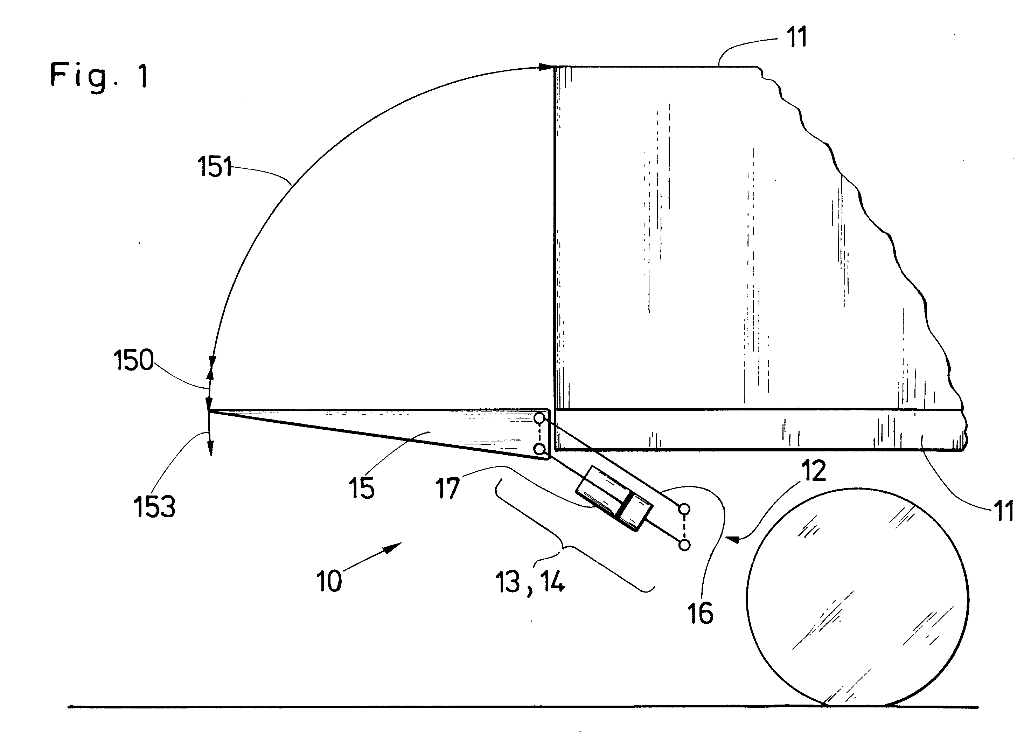

Es wird zunächst Bezug genommen auf das in Fig. 1 dargestellte Ladebordwandsystem 10, das anhand dieser Darstellung bezüglich seines grundsätzliches Aufbaus beschrieben wird. Das Ladebordwandsystem 10 umfaßt im wesentlichen ein Hub- und Klapptragwerk 12, das wiederum aus einen ersten Tragwerk 13 und einem zweiten Tragwerk 14 besteht, die im wesentlichen parallel voneinander beabstandet an einem Fahrzeug 11 mit geeigneten Mitteln befestigt werden. Das erste und das zweite Tragwerk 13, 14 bilden zusammen mit den Befestigungsmitteln eine parallelogrammförmige Struktur.

Es sei an dieser Stelle darauf hingewiesen, daß es Ladebordwandsysteme 10 gibt, die an einem Tragwerk 13 sowohl eine Hubzylindereinrichtung 16 als auch eine Klappzylindereinrichtung 17 umfassen, d.h. an jedem Tragwerk 13 eine gesonderte Hubzylindereinrichtung 16 und eine gesonderte Klappzylindereinrichtung 17 und an dem Tragwerk 14 ebenfalls eine gesonderte Hubzylindereinrichtung 16 und eine gesonderte Klappzylindereinrichtung 17. Es gibt aber auch Ladebordwandsysteme 10, bei denen in einem Tragwerk 13 lediglich eine Hubzylindereinrichtung 16 angeordnet ist und an dem anderen Tragwerk 14 lediglich eine Klappzylindereinrichtung 17, d.h. derartige Ladebordwandsysteme 10 umfassen insgesamt nur eine einzige Hubzylindereinrichtung 16 und eine einzige Klappzylindereinrichtung 17.

Unabhängig von den vorangehend beschriebenen Ausgestaltungen der beiden im Stand der Technik bekannten Ladebordwandsysteme 10 wird nachfolgend die Erfindung und die Funktion der Erfindung beschrieben, da es für den bestimmungsgemäßen Aufbau und die Funktion der Erfindung nicht darauf ankommt, ob nun in dem Ladebordwandsystem 10 nur eine Hubzylindereinrichtung 16 und eine Klappzylindereinrichtung 17 angeordnet sind oder jeweils zwei.

Bei allen bekannten Ladebordwandsystemen 10 dieser Art wird mit dem ersten und zweiten Tragwerk 13, 14 eine im wesentlichen plattenförmige Ladebordwand 15 zum Heben und Absenken einer Last (ohne Last dargestellt) und zum Verschließen eines Stauraums des Fahrzeugs 11 drehbar verbunden. Mit den Tragwerken 13, 14 wirkt eine hier sehr schematisch dargestellte Hubzylindereinrichtung 16 zum Heben und Senken der Ladebordwand 15 zusammen. Die Klappzylindereinrichtung 17, die zum Verschwenken der Ladebordwand von der Horizontalen in die Vertikale und umgekehrt dient, wirkt mit den Tragwerken 13, 14 ebenfalls zusammen und ist ebenfalls Teil seiner parallelogrammförmigen Struktur. Da der Hub- und Schwenkmechanismus derartiger Ladebordwände 15 an sich grundsätzlich dem Fachmann bekannt ist, ist ein weiteres Eingehen darauf an dieser Stelle entbehrlich.

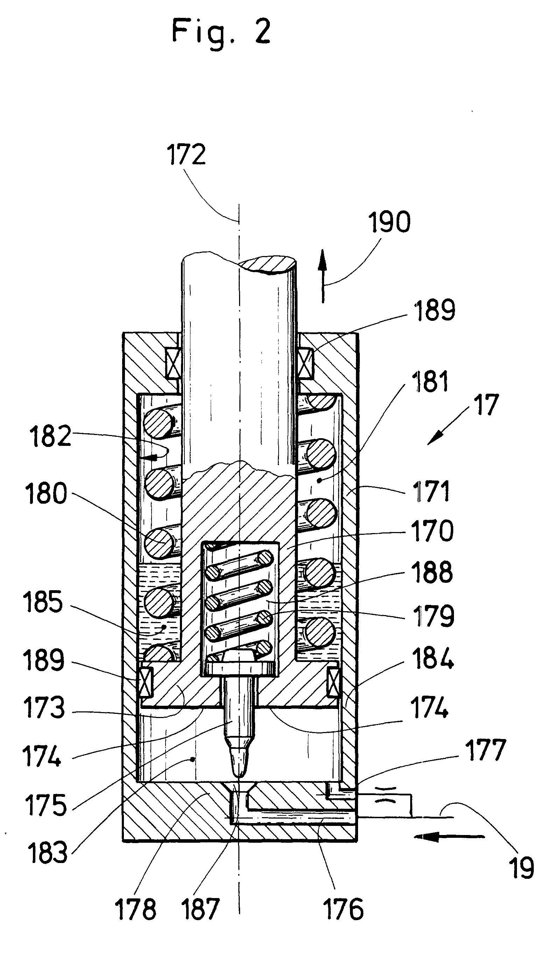

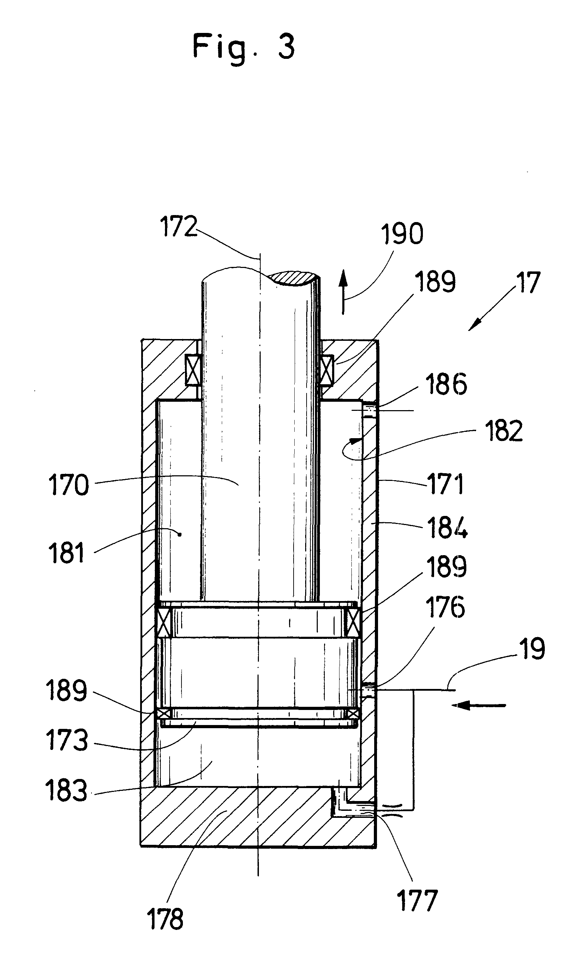

Die Klappzylindereinrichtung 17, die die eigentliche Schwenkbewegung der Ladebordwand 15 von der Horizontalen in die Vertikale und umgekehrt durchführt, umfaßt einen Kolben 170 und einen Zylinder 171, vgl. die Figuren 2 und 3, in dem der Kolben 170 im wesentlichen axial zur Zylinderachse 172 unter Einfluß eines Druckmediums 19 verschiebbar ist. Das Druckmedium 19 ist normalerweise eine Hydraulikflüssigkeit, grundsätzlich kann aber auch gasförmiges Medium, beispielsweise Druckluft, Verwendung finden. Der Kolben 170 weist einen Kolbenkopf 173 auf, der zusammen mit dem Zylinderkopf 178 und der Zylinderwand 184 den Druckraum 183 bildet, in dem das Druckmedium 19 über die erste Zufuhrleitung 176 bzw. Öffnung und die zweite Zufuhrleitung 177 bzw. Öffnung eintritt bzw. aus diesem durch die jeweiligen Öffnungen 176, 177 wieder herausbefördert wird.

Der Kolbenkopf 173 weist in seinem Kopfbereich 174 einen zur Zylinderachse 172 paralleles und axial verschiebbares Stiftelement 175 auf. Das Stiftelement 175 weist eine konisch ausgebildete Spitze auf, die in eine im Zylinderkopf 178 ausgebildete Öffnung 187 einführbar ist, was noch weiter unten eingehender beschrieben wird. Die Öffnung 187 ist zum Druckraum 183 hin konisch erweitert.

In einem im Kolben 170 und im Kolbenkopf 173 ausgebildeten Sackloch 188, das im wesentlichen axial zur Zylinderachse 172 ausgebildet ist, ist eine Druckfeder 179 vorgesehen, mit der das Stiftelement 175 in seiner aus dem Kolbenkopf 173 maximal herausragenden Grundstellung gehalten wird, wie es in Fig. 2 dargestellt ist.

Auch der Kolbenkopf 173 wird mittels einer Druckfeder 180 in seiner an den Zylinderkopf 178 maximal angenäherten Endstellung gehalten. Diese Druckfederbeaufschlagung 180 des Zylinderkopfes ist nur im Zusammenhang mit der Ausgestaltung des Ladebordwandsystems gemäß Fig. 2 dargestellt, grundsätzlich ist es aber auch möglich, eine derartige Druckfederbeaufschlagung bei der Ausgestaltung des Ladebordwandsystems 10 gemäß Fig. 3 vorzusehen. Der Raum 171 zwischen Kolben 170 und Zylinderinnenwand 182 ist mit einem Schmier- oder Gleitmittel 185 befüllt, und zwar in einem solchen Maße, daß die maximal mögliche Hubbewegung des Kolbens 170 im Zylinder 171 davon nicht beeinträchtigt wird. Das Schmier- oder Gleitmittel 185 weist, wie es der Name sagt, Schmier- und Gleiteigenschaften auf. Sowohl der Kolben 170 als auch der Kolbenkopf 173 weisen jeweils Lager- und Dichtmittel 189 nach Art von Kolbenringen auf, um den Eintritt von Druckmedium 19 aus dem Druckraum 183 in den Raum 181 bzw. Austritt von Schmier- und/oder Gleitmittel 185 aus dem Raum 181 über das Lager- und Dichtmittel 189 hindurch nach außen zu vermeiden, wobei dieses letztere Lager- und Dichtmittel 189 auch den Eintritt von Umgebungsmedium wie Feuchtigkeit, Staub, Salz und sonstige Umgebungsverunreinigungen in den Raum 180 hinein vermeidet.

Bei der in Fig. 1 dargestellten horizontalen Stellung der Ladebordwand 15 als Grundstellung ist der Kolben 170 bzw. der Kolbenkopf 173 derart vertikal nach unten verschoben (bezogen auf die Darstellung von Fig. 2), daß das Stiftelement 175 mit seiner konischen Spitze in der Öffnung 187 steckt, so daß die erste Zufuhrleitung 176 für das Druckmedium 19, das auf geeignete Weise an der ersten Zufuhrleitung 176 und der zweiten Zufuhrleitung 177 ansteht, und zwar mittels eines geeignet gewählten Drucks, nicht die Öffnung 187 zum Eintritt in den Druckraum 183 passieren kann. In der in Fig. 1 dargestellten horizontalen Endstellung der Ladebordwand 15 ist der Kopfbereich 174 soweit an den Zylinderkopf 178 angenähert, daß lediglich noch eine geringfügige Schwenkbewegung in Form eines Winkelintervalls 153 (drittes Winkelintervall) der Ladebordwand 15 möglich ist, um diese nämlich noch um den Winkel entsprechend dem dritten Winkelintervall 153 aus der Horizontalen nach unten abkippen zu können, wenn die Ladebordwand 15 beispielsweise auf den Untergrund abgesenkt worden ist, d.h. noch um das dritte Winkelintervall 153 geschwenkt wurde, um beispielsweise eine Last mit einer Sackkarre und dergleichen auf die Ladebordwand 15 problemlos aufschieben zu können.

Nachdem ein Ladevorgang mittels des Ladebordwandsystems abgeschlossen ist, wird die Ladebordwand 15 in eine Stellung entsprechend Fig. 1 mit der Hubzylindereinrichtung 16 angehoben. Zuvor ist jedoch mit der Klappzylindereinrichtung die Ladebordwand 15 in eine horizontale Stellung überführt worden, und zwar entsprechend dem dritten Winkelintervall 153. Dazu wird Druckmedium 19 über die zweite Zufuhrleitung bzw. Öffnung in den Druckraum 183 geleitet, so daß entsprechend dem dritten Winkelintervall 153 eine Bewegung des Zylinders 171 bzw. des Zylinderkopfes 173 entsprechend dem Pfeil 190 entgegen der Kraft der Druckfeder 180 veranlaßt wird. Dieses geschieht mit einer Schwenkgeschwindigkeit v₅, die aufgrund der gewählten Konstruktion der Klappzylindereinrichtung 17 normalerweise so groß wie v₁ ist (v₅ = v₁).

Soll jetzt die Verschwenkung der Ladebordwand 15 von der Horizontalen in die Vertikale eingeleitet werden, und zwar in einem vorbestimmten ersten Winkelintervall 150 mit einer vorbestimmten Geschwindigkeit v₁ und nachfolgend in einem vorbestimmten zweiten Winkelintervall mit einer vorbestimmten Geschwindigkeit v₂, so wird über die zweite Zufuhrleitung 177 (weiterhin) Druckmedium 19 in den Druckraum 183 befördert. Da die Förderung durch geeignet ausgebildete Fördereinrichtungen wie Pumpen und dergleichen gleichmäßig erfolgt, erfolgt eine weitere gleichmäßige Bewegung des Kolben 170 bzw. des Kolbenkopfes 173 in Richtung des Pfeiles 190. Diese Bewegung erfolgt mit einer Geschwindigkeit entsprechend dem zugeführten Druckmedium 19 so lange, wie das Stiftelement 175, von der Kraft der Druckfeder 189 im Sackloch 188 beaufschlagt, in der Öffnung 187 verbleibt. Stiftelement 175 und Öffnung 187 bilden somit ein Ventil. Aufgrund der Bemessung und konstruktiven Ausgestaltung des Stiftelementes 175 sowie des Kolbens 170 und des Zylinders 171 ist der Weg des Kolbens 170 in Richtung des Pfeiles 190 derart bemessen, daß dann die Öffnung 187 durch Austritt des Stiftelementes 175 befreit bzw. geöffnet wird, wenn beispielsweise die Ladebordwand 15 eine Schwenkbewegung in Richtung der Vertikalen aus der Horizontalen um beispielsweise 10° gemacht hat. Ist das Ende dieses ersten Winkelintervalls 150 (ca. 10°) erreicht, kann somit aufgrund der freigelegten Öffnung 187 auch durch die erste Zufuhrleitung 176 zusätzliches Druckmedium 19 in den Druckraum 183 gelangen, so daß nunmehr pro Zeit eine größere Menge an Druckmedium gefördert wird, so daß die nachfolgende Schwenkbewegung in der Ladebordwand 15 aufgrund der Bewegung des Kolbens 170 bzw. des Kolbenkopfes 173 in Richtung des Pfeiles 190 mit einer größeren Schwenkgeschwindigkeit v₂ durchgeführt wird, wobei die im ersten Winkelintervall 150 gewählte Geschwindigkeit v₁ ist und v₁ < v₂.

Ist die Aufwärtsschwenkbewegung mit der Geschwindigkeit v₂ abgeschlossen, d.h. hat die Ladebordwand 15 die vertikale Endstellung erreicht, wird durch geeignete Stop- und Stellmittel, die hier nicht näher dargestellt sind, die weitere Zufuhr von Druckmedium 19 durch die erste und zweite Zufuhrleitung 176, 177 in den Druckraum 183 hinein unterbrochen, so daß die vertikale Endstellung der Ladebordwand 15 beibehalten wird.

Beim Verschwenken der Ladebordwand 15 von der Vertikalen in die Horizontale erfolgt in dem vorbestimmten zweiten Winkelintervall 151 die Zurückschwenkbewegung mit einer Geschwindigkeit v₃ und nachfolgend in dem dann erreichten vorbestimmten ersten Winkelintervall 150 mit einer Geschwindigkeit v₄, wobei v₃ > v₄ ist. Dabei kann v₁ genauso groß wie v₄ gewählt werden und ebenfalls v₂ so groß wie v₃ Beispielsweise ist die Geschwindigkeit v₁ mit 4° sec⁻¹ und v₂ mit 10° sec⁻¹ bemessen. Es können aber auch beliebige andere geeignete Geschwindigkeiten in den jeweiligen ersten und zweiten Winkelintervallen 150, 151 sowohl für die Schwenkbewegung in die Vertikale als auch für die Schwenkbewegung der Ladebordwand 15 aus der Vertikalen gewählt werden.

Auch bei der Rückschwenkbewegung der Ladebordwand 15 von der Vertikalen in die Horizontale wird die Geschwindigkeit v₄ im ersten Winkelintervall 150 wieder automatisch eingenommen, da der Kolben 170, entgegen der Richtung des Pfeiles 190, zuerst das Stiftelement 175 bewegt, das, wie gesagt, mittels der Druckfeder 179 in seiner aus dem Kolben 173 maximal herausragenden Endstellung gehalten wird, und somit zunächst mit seiner konischen Spitze wiederum in die Öffnung 187 hineintritt und somit die Rückführung von Druckmedium 19 aus dem Druckraum 183 durch die erste Zufuhrleitung 176 verhindert, so daß Druckmedium 19 lediglich noch aus der zweiten Zufuhrleitung 177 und somit in verminderter Menge pro Zeit austreten kann. Somit wird automatisch eine geringere Schwenkgeschwindigkeit der Ladebordwand 15 mit v₄ < v₃ erreicht wird. Da beim Erreichen der Horizontalen das Stiftelement 175 in der Öffnung 187 steckt, erfolgt auch die Schwenkbewegung gemäß dem dritten Intervall 153 zum geringfügigen Abkippen der Ladebordwand 15 aus der Horizontalen nach unten mit der Geschwindigkeit v₅, um auf der fahrbaren Fläche eine Rampe für das Auffahren von Ladung auf die Ladebordwand 15 zu schaffen, d.h. mit der gleichen Geschwindigkeit entsprechend v₁ bzw. v₄.

Bei der Ausgestaltung des Ladebordwandsystems 10 gemäß Fig. 3, d.h. bei der dortigen Klappzylindereinrichtung 17, fehlt bei ansonsten gleichem Aufbau das Stiftelement 175. Der Kolbenkopf 173 gemäß der Ausgestaltung von Fig. 3 weist zwei in axialer Richtung voneinander beabstandete Lager- und Dichtmittel 189 auf. Bei einer Bewegung des Kolbens 170 in Richtung des Pfeiles 190 bei den Schwenkbewegungen im ersten und zweiten Winkelintervall 150, 151, wie es im Zusammenhang mit der Ausgestaltung von Fig. 2 vorangehend beschrieben worden war, wird zunächst bei Beginn der Schwenkbewegung durch die zweite Zufuhrleitung 177, die im Zylinderkopf 178 ausgebildet ist, Druckmedium 19 in den Druckraum 183 gefördert. Sobald die Bewegung des Kolbens 170 in Richtung des Pfeiles 190 derart weit erfolgt ist, daß eine in der Zylinderwand 182 ausgebildete erste Zufuhrleitung 176 freigelegt wird, kann über die erste Zufuhrleitung 176 zusätzlich Druckmedium 19 in den Druckraum 183 gelangen, so daß die Verschiebung des Kolbens 170 in Richtung des Pfeiles 190 entsprechend v₂ im zweiten Winkelintervall 151 vergrößert wird. Im ersten Winkelintervall 150 wird die Bewegung des Kolbens 170 in Richtung des Pfeiles 190 entsprechend v₁ durch die eine in den Druckraum 183 mündende zweite Zufuhrleitung 177 reduziert, d.h. v₁ < v₂. Für die Umkehr der Schwenkbewegung der Ladebordwand 15 aus der Vertikalen in die Horizontale ist v₃ < v₄, wobei auch hier v₁ = v₄ und v₂ = v₃ sein kann mit v₁ = 4° sec⁻¹ und v₂ mit 10° sec⁻¹.

Die Ausgestaltung des Ladebordwandsystems 10 gemäß Fig. 3 gegenüber der gemäß Fig. 2 unterscheidet sich auch noch darin, daß hier für die Aufrechterhaltung der Rückstellbewegung des Kolbens 170, d.h. bei der Bewegung der Ladebordwand 15 von der Vertikalen in die Horizontale, keine Druckfeder 180 vorgesehen ist. Obwohl auch bei der Ausgestaltung des Ladebordwandsystems gemäß Fig. 10 grundsätzlich, obwohl nicht dargestellt, eine Druckfeder 180 dienen kann, ist hier für die Rückstellung die Möglichkeit geschaffen, über eine dritte Zufuhrleitung 186, die ebenfalls auf der anderen Seite des Zylinders 171 als die zweite Zufuhrleitung 177 angeordnet ist, Druckmedium in den Raum 181 hineinzuführen, so daß durch den Volumen- bzw. Druckaufbau des Druckmediums 19 im Raum 188 eine Rückbewegung des Kolbens 170 entgegen der Richtung des Pfeiles 190 bewirkt werden kann.

### Bezugszeichenliste

- 10: Ladebordwandsystem
- 11: Fahrzeug
- 12: Hub- und Klapptragwerk
- 13: erstes Tragwerk
- 14: zweites Tragwerk
- 15: Ladebordwand
- 150: erstes Winkelintervall
- 151: zweites Winkelintervall
- 153: drittes Winkelintervall
- 16: Hubzylindereinrichtung
- 17: Klappzylindereinrichtung
- 170: Kolben
- 171: Zylinder
- 172: Zylinderachse
- 173: Kopf (Kolbenkopf)
- 174: Kopfbereich
- 175: Stiftelement
- 176: erste Zufuhrleitung/Öffnung
- 177: zweite Zufuhrleitung/Öffnung
- 178: Kopf (Zylinderkopf)
- 179: Druckfeder
- 180: Druckfeder
- 181: Raum
- 182: Zylinderinnenwand
- 183: Druckraum
- 184: Zylinderwand
- 185: Schmier- und Gleitmittel
- 186: dritte Zufuhrleitung/Öffnung
- 187: Öffnung
- 188: Sackloch
- 189: Lager- und Dichtmittel
- 190: Pfeil

## Patentansprüche

1. Ladebordwandsystem (10) zur Befestigung an Fahrzeugen (11), insbesondere Lastkraftfahrzeugen, umfassend ein im wesentlichen parallelogrammförmiges, aus zwei im wesentlichen parallel voneinander beabstandeten Tragwerken (13, 14) bestehendes Hub- und Klapptragwerk (12), eine im wesentlichen plattenförmige Ladebordwand (15) zum Heben und Absenken einer Last und zum Verschließen eines Stauraumes des Fahrzeugs (11) und wenigstens eine Hubzylindereinrichtung (16) zum Heben und Senken der Ladebordwand (15) sowie wenigstens eine Klappzylindereinrichtung (17) zum Verschwenken der Ladebordwand (10) von der Horizontalen in die Vertikale und umgekehrt, dadurch gekennzeichnet, daß die Klappzylindereinrichtung (17) derart aufgebaut ist, daß die Verschwenkung der Ladebordwand (15) von der Horizontalen in die Vertikale in einem vorbestimmten ersten Winkelintervall (150) mit einer vorbestimmten Geschwindigkeit v₁ erfolgt und in einem vorbestimmten zweiten Winkelintervall (151) mit einer vorbestimmten Geschwindigkeit v₂ erfolgt, wobei v₁ < v₂ ist.

2. Ladebordwandsystem (10) zur Befestigung an Fahrzeugen (11), insbesondere Lastkraftfahrzeugen, umfassend ein im wesentlichen parallelogrammförmiges, aus zwei im wesentlichen parallel voneinander beabstandeten Tragwerken (13, 14) bestehendes Hub- und Klapptragwerk (12), eine im wesentlichen plattenförmige Ladebordwand (15) zum Heben und Absenken einer Last und zum Verschließen eines Stauraumes des Fahrzeuges (11) und wenigstens eine Hubzylindereinrichtung (16) zum Heben und Senken der Ladebordwand (15) sowie wenigstens eine Klappzylindereinrichtung (17) zum Verschwenken der Ladebordwand (10) von der Horizontalen in die Vertikale und umgekehrt, dadurch gekennzeichnet, daß die Klappzylindereinrichtung (17) derart aufgebaut ist, daß die Verschwenkung der Ladebordwand (15) von der Vertikalen in die Horizontale in einem vorbestimmten zweiten Winkelintervall (151) mit einer Geschwindigkeit v₃ erfolgt und in einem vorbestimmten ersten Winkelintervall (150) mit einer Geschwindigkeit v₄ erfolgt, wobei v₃ > v₄ ist.

3. Ladebordwandsystem nach Anspruch 1 und 2, dadurch gekennzeichnet, daß v₁ = v₄ ist.

4. Ladebordwandsystem nach Anspruch 1 und 2, dadurch gekennzeichnet, daß v₂ = v₃ ist.

5. Ladebordwandsystem nach einem oder mehreren der Ansprüche 1, 3 oder 4, dadurch gekennzeichnet, daß v₁ 4° sec⁻¹ ist.

6. Ladebordwandsystem nach einem oder mehreren der Ansprüche 1 oder 3 bis 5, dadurch gekennzeichnet v₂ 10° sec⁻¹ ist.

7. Ladebordwandsystem nach einem oder mehreren der Ansprüche 1 bis 6, dadurch gekennzeichnet, daß die Klappzylindereinrichtung (17) einen Kolben (170) und einen Zylinder (171) umfaßt, in dem der Kolben (170) im wesentlichen axial zur Zylinderachse (172) unter Einfluß eines Druckmediums (19) verschiebbar ist, wobei der Kolben (170) in seinem Kopfbereich (174) ein zur Zylinderachse (172) paralleles und axial verschiebbares Stiftelement (175) aufweist, das bei Beginn der Schwenkbewegung der Ladebordwand (15) von der Horizontalen in die Vertikale solange eine zweite Zufuhrleitung (177) für das Druckmedium (19) in einem Kopf (178) des Zylinders (171) verschließt, bis das erste Winkelintervall (150) der Hubbewegung beendet ist.

8. Ladebordwandsystem nach Anspruch 7, dadurch gekennzeichnet, daß das Stiftelement (175) druckfederbeaufschlagt (179) in seiner aus dem Kolbenkopf (173) maximal herausragenden Grundstellung gehalten wird.

9. Ladebordwandsystem nach einem oder beiden der Ansprüche 7 oder 8, dadurch gekennzeichnet, daß der Kolbenkopf (173) druckfederbeaufschlagt (180) in seiner an den Zylinderkopf (178) wenigstens angenäherten Endstellung gehalten wird.

10. Ladebordwandsystem nach einem oder mehreren der Ansprüche 7 bis 9, dadurch gekennzeichnet, daß der Raum (181) zwischen Kolben (170) und Zylinderwand (182) mit einer vorbestimmten Menge eines wenigstens korrosionsbeständige Eigenschaften aufweisenden Schmier- und/oder Gleitmittels (185) befüllt ist.

11. Ladebordwandsystem nach einem oder mehreren der Ansprüche 1 bis 6, dadurch gekennzeichnet, daß die Klappzylindereinrichtung (17) einen Kolben (170) und einen Zylinder (171) umfaßt, in dem der Kolben (170) im wesentlichen axial zur Zylinderachse (172) unter Einfluß eines über eine zweite Zufuhröffnung (177) zugeführten Druckmediums (19), das in den Druckraum (183) eingebbar ist, soweit verschiebbar ist, bis das Ende des ersten Winkelintervalls (150) der Hubbewegung erreichbar ist, wobei dann eine erste Zufuhröffnung (176) durch den Kolbenkopf (173) freigegeben wird, durch die zusätzliches Druckmedium (19) in den Druckraum (183) gelangen kann.

12. Ladebordwandsystem nach Anspruch 11, dadurch gekennzeichnet, daß die erste Zufuhröffnung (176) in der Zylinderwand (184) ausgebildet ist.

## Claims

1. Loading tailboard system (10) for fastening to vehicles (11), in particular lorries, comprising an essentially parallelogram-shaped lifting and folding supporting framework (12), which consists of two supporting frameworks (13, 14) at a distance from one another and essentially parallel to one another, an essentially plate-shaped loading tailboard (15) for raising and lowering a load and for closing a loading space of the vehicle (11) and at least one lifting cylinder device (16) for raising and lowering the loading tailboard (15) and at least one folding cylinder device (17) for pivoting the loading tailboard (10) from the horizontal to the vertical and vice versa,
characterised in that the folding cylinder device (17) is constructed in such a way that the pivoting of the loading tailboard (15) from the horizontal to the vertical takes place within a predetermined first angular interval (150) with a predetermined speed v₁ and within a predetermined second angular interval (151) with a predetermined speed v₂, where v₁ is less than v₂.

2. Loading tailboard system (10) for fastening to vehicles (11), in particular lorries, comprising an essentially parallelogram-shaped lifting and folding supporting framework (12), which consists of two supporting frameworks (13, 14) at a distance from one another and essentially parallel to one another, an essentially plate-shaped loading tailboard (15) for raising and lowering a load and for closing a loading space of the vehicle (11) and at least one lifting cylinder device (16) for raising and lowering the loading tailboard (15) and at least one folding cylinder device (17) for pivoting the loading tailboard (10) from the horizontal to the vertical and vice versa, characterised in that the folding cylinder device (17) is constructed in such a way that the pivoting of the loading tailboard (15) from the vertical to the horizontal takes place within a predetermined second angular interval (151) with a predetermined speed v₃ and within a predetermined first angular interval (150) with a predetermined speed v₄, where v₃ being is than v₄.

3. Loading tailboard system according to Claim 1 or 2, characterised in that v₁ = v₄.

4. Loading tailboard system according to Claim 1 or 2, characterised in that v₂ = v₃.

5. Loading tailboard system according to one or more of Claims 1, 3 or 4, characterised in that v₁ is four degrees per second.

6. Loading tailboard system according to one or more of Claims 1 or 3 to 5,
characterised in that v₂ is ten degrees per second.

7. Loading tailboard system according to one or more of Claims 1 to 6, characterised in that the folding cylinder device (17) comprises a piston (170) and a cylinder (171), in which the piston (170) can be displaced essentially axially relative to the cylinder axis (172) under the influence of a pressure medium (19), the piston (170) having, in its crown region (174), an axially displaceable pin element (175) which is parallel to the cylinder axis (172) and which, at the beginning of the pivoting motion of the loading tailboard (15) from the horizontal to the vertical and until such time as the first angular interval (150) of the lifting motion has ended, closes a second supply line (177) for the pressure medium (19) into a head (178) of the cylinder (171).

8. Loading tailboard system according to Claim 7, characterised in that the pin element (175) is held in its basic position with maximum protrusion from the piston crown (173) under the action of a compression spring (179).

9. Loading tailboard system according to one or both of Claims 7 and 8, characterised in that the piston crown (173) is held into its end position, which at least approaches the cylinder head (178), under the action of a compression spring (180).

10. Loading tailboard system according to one or more of Claims 7 to 9, characterised in that the space (181) between piston (170) and cylinder wall (182) is filled with a predetermined quantity of a lubricating and/or sliding medium (185) having at least corrosion-resistant properties.

11. Loading tailboard system according to one or more of Claims 1 to 6, characterised in that the folding cylinder device (17) comprises a piston (170) and a cylinder (171), in which the piston (170) can be displaced essentially axially relative to the cylinder axis (172) under the influence of a pressure medium (19), which can be inserted into the pressure space (183) and which is supplied by means of a second supply opening (177), which piston (170) can be displaced to such an extent that the end of the first angular interval (150) of the lifting motion can be reached, a first supply opening (176) being then freed by the piston crown (173), through which the first supply opening (176) the additional pressure medium (19) can pass into the pressure space (183).

12. Loading tailboard system according to Claim 11, characterised in that the first supply opening (176) is configured in the cylinder wall (184).

## Revendications

1. Système de hayon élévateur (10) destiné à être fixé contre des véhicules (11), en particulier des camions, comprenant un cadre de levage et de pivotement (12) sensiblement en forme de parallélogramme, formé par deux consoles de support (13, 14) écartées l'une de l'autre de manière sensiblement parallèle, un hayon élévateur (15) sensiblement en forme de plateau, destiné à monter et abaisser une charge et à fermer un compartiment de chargement du véhicule (11), et au moins un dispositif à vérin de levage (16) destiné à monter et abaisser le hayon élévateur (15), ainsi qu'au moins un dispositif à vérin de pivotement (17), destiné à faire pivoter le hayon élévateur (15) d'un plan horizontal vers un plan vertical et inversement, caractérisé en ce que le dispositif à vérin de pivotement (17) est conçu de telle sorte que le pivotement du hayon élévateur (15) d'un plan horizontal vers un plan vertical est effectué dans un premier intervalle angulaire (150) prédéfini à une vitesse (v₁) prédéfinie et dans un deuxième intervalle angulaire (151) prédéfini à une vitesse (v₂) prédéfinie, sachant que v₁ < v₂.

2. Système de hayon élévateur (10) destiné à être fixé contre des véhicules (11), en particulier des camions, comprenant un cadre de levage et de pivotement (12) sensiblement en forme de parallélogramme, formé par deux consoles de support (13, 14) écartées l'une de l'autre de manière sensiblement parallèle, un hayon élévateur (15) sensiblement en forme de plateau, destiné à monter et abaisser une charge et à fermer un compartiment de chargement du véhicule (11), et au moins un dispositif à vérin de levage (16) destiné à monter et abaisser le hayon élévateur (15), ainsi qu'au moins un dispositif à vérin de pivotement (17), destiné à faire pivoter le hayon élévateur (15) d'un plan horizontal vers un plan vertical et inversement, caractérisé en ce que le dispositif à vérin de pivotement (17) est conçu de telle sorte que le pivotement du hayon élévateur (15) d'un plan vertical vers un plan horizontal est effectué dans un deuxième intervalle angulaire (151) prédéfini à une vitesse (v₃) prédéfinie et dans un premier intervalle angulaire (150) prédéfini à une vitesse (v₄) prédéfinie, sachant que v₃ > v₄.

3. Système de hayon élévateur selon les revendications 1 et 2, caractérisé en ce que v₁ = v₄.

4. Système de hayon élévateur selon les revendications 1 et 2, caractérisé en ce que v₂ = v₃

5. Système de hayon élévateur selon l'une ou plusieurs des revendications 1, 3 ou 4, caractérisé en ce que v₁ est égal à 4° sec⁻¹.

6. Système de hayon élévateur selon l'une ou plusieurs des revendications 1 ou 3 à 5, caractérisé en ce que v₂ est égal à 10° sec⁻¹.

7. Système de hayon élévateur selon l'une ou plusieurs des revendications 1 à 6, caractérisé en ce que le dispositif à vérin de pivotement (17) comprend un piston (170) et un cylindre (171), dans lequel le piston (170) peut se déplacer sensiblement dans le sens axial par rapport à l'axe du cylindre (172) sous l'effet d'un fluide sous pression (19), le piston (170) étant muni dans sa partie de tête (174) d'une goupille (175) parallèle à l'axe du cylindre (172) et pouvant se déplacer dans le sens axial, laquelle goupille, au début du mouvement de pivotement du hayon élévateur (15) du plan horizontal vers le plan vertical, obture une deuxième conduite d'admission (177) réservée au fluide sous pression (19), montée dans une tête (178) du cylindre (171), jusqu'au moment où le mouvement de levage sort du premier intervalle angulaire (150).

8. Système de hayon élévateur selon la revendication 7, caractérisé en ce que la goupille (175) est maintenue sous l'effet d'un ressort de pression (179) dans sa position de base, dans laquelle elle s'engage au maximum hors de la tête du piston (173).

9. Système de hayon élévateur selon l'une ou les deux revendications 7 ou 8, caractérisé en ce que la tête du piston (173) est maintenue sous l'effet d'un ressort de pression (180) dans sa position finale, dans laquelle elle est située au moins à proximité de la tête du cylindre (178).

10. Système de hayon élévateur selon l'une ou plusieurs des revendications 7 à 9, caractérisé en ce que le compartiment (181) entre le piston (170) et la paroi du cylindre (182) contient une quantité prédéfinie d'un lubrifiant et/ou d'un agent antifriction (185) présentant au moins des propriétés anticorrosives.

11. Système de hayon élévateur selon l'une ou plusieurs des revendications 1 à 6, caractérisé en ce que le dispositif à vérin de pivotement (17) comprend un piston (170) et un cylindre (171), dans lequel un fluide sous pression (19), qui est acheminé par l'intermédiaire d'un deuxième orifice d'admission (177) et qui peut pénétrer dans le compartiment sous pression (183), influence le déplacement du piston (170) sensiblement dans le sens axial par rapport à l'axe du cylindre (172) jusqu'au moment où le mouvement de levage atteint la fin du premier intervalle angulaire (150), la tête de piston (173) libérant alors un premier orifice d'admission (176) par lequel un fluide sous pression (19) supplémentaire pénètre dans le compartiment sous pression (183).

12. Système de hayon élévateur selon la revendication 11, caractérisé en ce que le premier orifice d'admission (176) est réalisé dans la paroi du cylindre (184).
